# FASCICULE DE BREVET EUROPEEN

(11) **EP 2 427 936 B1**
(45) Date de publication et mention de la délivrance du brevet: **18.07.2018**
(21) Numéro de dépôt: 10721390.2
(22) Date de dépôt: 05.05.2010
(51) Int. Cl.: A47J 31/46, A47J 31/54, H01R 4/48, H01R 43/20, H05B 3/00, H01R 13/24, H01R 13/41

(54) **MODULE ÉLECTRIQUE POUR MACHINE DE PRÉPARATION DE BOISSONS**
ELEKTRISCHES MODUL FÜR GETRÄNKEVORBEREITUNGSGERÄTE
ELECTRICAL MODUL FOR BEWERAGE PREPARATION APPARATUS

(30) Priorité: 06.05.2009 FR 0953005
(43) Date de publication de la demande: 14.03.2012
(73) Titulaire: Compagnie Méditerranéenne des Cafés, 06510 Carros (FR)
(72) Inventeur: BLANC, Jean-Pierre, F-06000 Nice (FR); GOERING, Alain, F-06000 Nice (FR)
(74) Mandataire: Decobert, Jean-Pascal
(86) Numéro de dépôt international: PCT/EP2010/056100
(87) Numéro de publication internationale: WO 2010/128080

(56) Documents cités:
- EP-A1- 0 866 528
- DE-U1- 20 121 579
- FR-A1- 2 920 654
- US-A- 5 453 028
- US-A- 6 074 242
- US-B1- 6 178 091

## Description

La présente invention concerne un module électrique pour machine de préparation de boissons ainsi qu'un procédé de montage d'un connecteur électrique dans un tel module.

L'invention porte plus particulièrement sur les questions de connexion électrique de modules au sein d'une machine de préparation de boissons ou à l'intérieur même du module. Elle trouvera notamment son application pour des machines de préparation de boissons chaudes et tout particulièrement pour machines à café.

De manière connue, une machine de préparation de boissons comporte plusieurs modules assurant chacun au moins une fonction particulière. Ainsi, une machine comprend par exemple généralement une chaudière pour le chauffage d'un liquide et une pompe pour la mise sous pression du liquide. Selon la boisson à préparer, la machine comprend un nombre plus ou moins important de modules.

Les modules comportent généralement un corps ainsi qu'au moins un organe électrique porté par le corps, cet organe devant être alimenté en électricité pour fonctionner ou devant être raccordé à d'autres éléments de circuit. Par exemple, dans un module constituant une chaudière un organe électrique peut être un élément chauffant tel une résistance produisant de la chaleur lorsqu'il est alimenté en électricité. L'organe électrique nécessite d'être connecté au circuit électrique de la machine. De même, une chaudière implique généralement des éléments de sécurité électrique notamment des coupe-circuits du type fusibles ou encore des éléments de régulation en température impliquant la présence de moyens de détection de température.

A cet effet, dans les modules existants, les fils conducteurs liés aux organes électriques sont connectés à des fils liés au circuit d'alimentation de la machine ou aux autres circuits par des cosses de type cosses Faston®.

De manière connue, ce type de connexion comprend une cosse femelle solidaire d'un premier fil et une cosse mâle solidaire d'un deuxième fil apte à s'insérer dans la cosse femelle pour assurer le contact électrique. Ce type de connexion ne donne cependant pas satisfaction. En premier lieu, en fonction de la configuration de la machine et du module, l'insertion de la cosse mâle dans la cosse femelle peut s'avérer particulièrement délicate. Par ailleurs, une machine comporte généralement de nombreux composants électriques (par exemple : une chaudière, une pompe, divers capteurs, divers voyants en plus du circuit d'alimentation) si bien que le nombre de cosses peut être relativement important. Par conséquent, le risque que deux fils soient connectés l'un l'autre de manière erronée est loin d'être négligeable. Ces inconvénients rendent les modules existants peu faciles à assembler et à désassembler lors des opérations de maintenance notamment.

Le document FR-A-2 920 654 divulgue une chaudière pour machine à café dans laquelle des connexions électriques sont présentes

Il faut par ailleurs souligner que les machines de préparation de boissons constituent un environnement susceptible de gêner la fiabilité des connexions électriques. En particulier, les machines de préparation de boissons sont usuellement soumises à des vibrations (par exemple dues à la pompe) et à des dilatations thermiques élevées (par exemple dues à la chaudière).

Le demandeur a constaté que les machines actuelles souffraient de problèmes de fiabilité à ce niveau pouvant limiter la durée de vie des appareils et éventuellement poser des questions de sécurité notamment lorsque des organes de sécurité sont mal connectés.

La présente invention a pour objectif de remédier en tout ou partie aux inconvénients des modules électriques pour machine de préparation de boissons connus jusqu'à présent.

Elle propose à cet effet d'incorporer dans le module un ou plusieurs connecteurs électriques d'un type particulier et coopérant chacun avec un logement formé dans le module de sorte qu'un bon contact électrique est garanti y compris sur une longue période et malgré des sollicitations extérieures élevées notamment en termes de vibrations et de dilatation thermique. Plus précisément, le connecteur électrique comporte deux zones de contact aptes à s'appliquer chacune sur un organe électrique, ainsi qu'une partie de fixation permettant de fixer en position le connecteur électrique dans un logement du module. La partie de fixation garantit le bon positionnement au montage et dans le temps de l'ensemble du connecteur électrique de sorte que les zones de contact ont une position ajustée pour s'appliquer continûment sur l'organe électrique qu'elles doivent relier. Cette application des zones de contact s'effectue par ailleurs par déformation élastique du connecteur à ces endroits si bien que l'effet des vibrations et des dilatations thermiques sont compensées.

L'invention concerne également un procédé de montage d'un connecteur électrique dans un module qui assure une grande rapidité d'exécution tout en garantissant la fiabilité du positionnement des connecteurs électriques. Ce procédé peut par ailleurs être utilisé au démontage des connecteurs grâce à un outil de préhension apte à coopérer avec un trou oblong formé dans le connecteur dans un mode de réalisation préféré. En facilitant l'assemblage et le désassemblage du module, l'invention s'inscrit particulièrement bien dans un concept d'éco-conception. Les opérations de maintenance sont en effet facilitées.

D'autres buts et avantages de l'invention pourront apparaître de la description détaillée qui suit d'un mode de réalisation préféré de l'invention non limitatif.

Auparavant, on rappelle que la présente invention concerne un module électrique pour machine de préparation de boissons, comportant au moins un premier organe électrique destiné à être relié à au moins un deuxième organe électrique par au moins un connecteur électrique fixé dans un logement selon la partie caractérisante de la revendication indépendante 1. Le module de l'invention peut se présenter suivant les variantes avantageuses mais non limitatives suivantes :
- la partie de fixation est reliée à la première zone de contact par un coude configuré pour que, au repos, la première zone de contact et la partie de fixation forment un angle obtus,
- la partie de raccordement comporte une portion convexe,
- les moyens de fixation sont configurés pour coopérer avec deux parois opposées du logement,
- les moyens de fixation comportent des premiers moyens, et des deuxièmes moyens générant sur les parois du logement un effort d'accrochage supérieur à celui des premiers moyens,
- les moyens de fixation comprennent au moins une paire de dents chacune apte à coopérer avec l'une des deux parois opposées du logement,
- le logement est un trou débouchant et les première et deuxième zones de contact sont configurées pour, lorsqu'elles sont au repos, faire saillie vers l'extérieur chacune à une extrémité du logement,
- le module comporte un autre premier organe électrique constitué par une sonde de température, des autres deuxièmes organes électriques constitués par des plots de transmission de données et au moins un connecteur électrique pour relier chaque borne de la sonde de température aux plots de transmission de données
- le connecteur électrique est constitué par une lame recourbée
- la lame est en alliage de cuivre béryllium,
- le connecteur électrique comporte un trou oblong de préhension,

L'invention concerne en second lieu un procédé de montage d'un connecteur électrique dans un module comportant les étapes suivantes :
- insertion d'un outil de préhension dans le trou oblong du connecteur;
- mise en appui d'une surface de butée de l'outil de préhension sur le pourtour du trou oblong;
- positionnement du connecteur dans le logement par un premier mouvement d'introduction;
- libération et retrait de l'outil de préhension;
- fixation finale du connecteur dans le logement par un deuxième mouvement d'introduction de la partie de fixation généré par un outil de fixation.

Les dessins ci-joints sont donnés à titre d'exemples et ne sont pas limitatifs de l'invention. Ils représentent seulement un mode de réalisation de l'invention et permettront de la comprendre aisément.
Les figures 1 et 2 présentent selon deux vues en perspective un exemple de réalisation de connecteur électrique.
La figure 3 montre une possibilité de positionnement du connecteur électrique dans un logement du module.
Les figures 4 à 20 montrent des étapes successives de montage d'un connecteur électrique dans un logement.
La figure 21 présente une partie d'un module illustrant l'environnement d'implantation des connecteurs électriques.
La figure 22 montre un mode de réalisation d'un plot utilisable par l'invention.
La figure 23 montre une possibilité d'implantation de divers logements de réception de connecteurs électriques dans un module.
La figure 24 montre la formation d'une plaque portant des organes électriques du type résistance chauffante et sonde de température.
La figure 25 et la figure 26 montre plus particulièrement la coopération du corps d'un module, des connecteurs électriques et de la plaque illustrée à la figure 24.
Les figures 27 à 29 montrent l'implantation de connecteurs électriques dans une autre partie d'un module.
La figure 30 schématise l'assemblage de deux parties de module et la connexion de connecteurs.
Les figures 31 et 32 montrent deux coupes révélant la mise en contact des connecteurs relativement aux organes électriques.
Les figures 33 et 34 sont des schémas de principe illustrant un mode particulier de mise en contact de connecteurs.

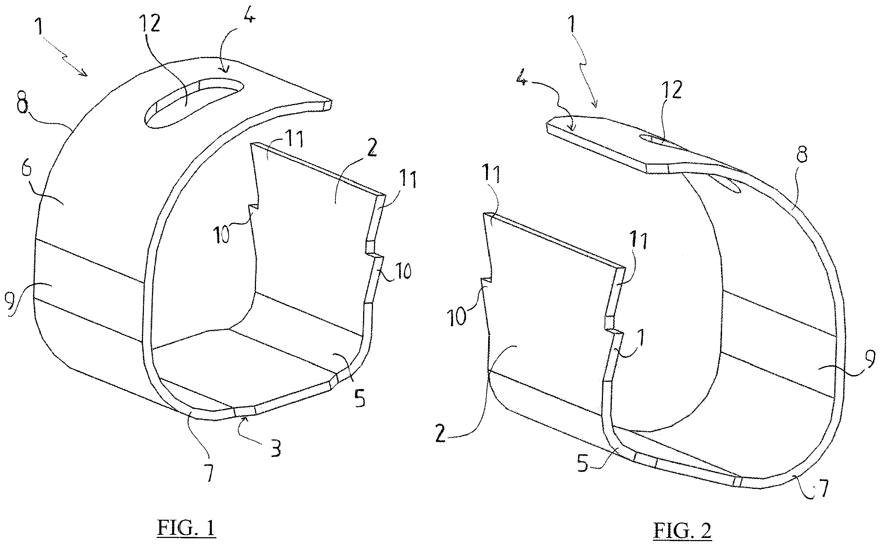

Suivant le cas avantageux illustré aux figures 1 et 2, le connecteur 1 implanté dans le module de l'invention est formé à partir d'une lame dont l'épaisseur et le matériau sont choisis pour être flexibles et conducteurs électriquement.

Avantageusement, on utilise un alliage de cuivre et de béryllium dont le demandeur a constaté qu'il donnait satisfaction en terme de tenue dans le temps des propriétés élastiques au regard des fortes contraintes de température parfois liées à certains modules, notamment ceux du type chaudière. D'autres alliages à base de cuivre ou plus généralement métalliques élastiques et conducteurs peuvent également convenir en fonction de la température maximale de fonctionnement, dont notamment des aciers inoxydables à ressort.

Avantageusement, le connecteur 1 est formé par mise en forme d'une lame. Les dimensions de la lame ne sont pas limitatives mais à titre d'exemple on peut utiliser une lame d'une longueur comprise entre 12 et 15 millimètres pour une largeur de 4,5 millimètres et une épaisseur de 0,2 millimètres.

Dans le cas représenté, le connecteur 1 comporte sensiblement quatre portions reliées entre elles et qui sont décrites chacune plus en détail ci-après.

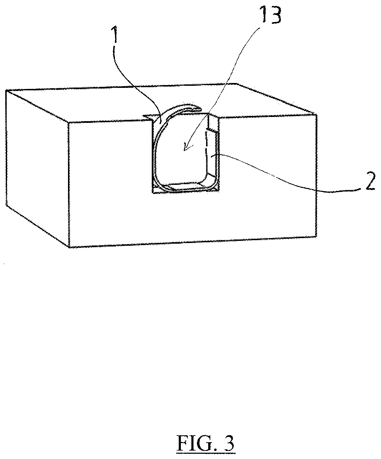

Une partie de fixation 2 présentant des moyens de fixation 10, 11 est destinée à assurer le positionnement et l'arrimage de l'ensemble du connecteur 1 dans son logement 13. Un exemple de la coopération entre la partie de fixation 2 et le logement 13 est présenté en figure 3. Différents moyens de fixation 10, 11 peuvent être prévus.

Dans le cas représenté, des premiers moyens de fixation 10 sont formés sous forme d'une paire de dents, chaque dent étant apte à s'appliquer sur une paroi du logement 13. Des deuxièmes moyens de fixation 11 sont prévus sensiblement de façon similaire à proximité de l'extrémité libre de la partie de fixation 2. Il est entendu que la largeur de la partie de fixation 2 et des moyens de fixation 10, 11 est ajustée à la largeur du logement 13 correspondante de sorte à provoquer un accrochage de la partie de fixation 2 lors de son introduction dans le logement 13. Par ailleurs, suivant une possibilité avantageuse, les premiers moyens de fixation délivrent une première force de fixation durant une phase de positionnement du connecteur 1 dans le logement 13. Ensuite, dans une phase de sécurisation finale, les deuxièmes moyens de fixation 11 sont utilisés pour augmenter l'effort de résistance du connecteur 1 alors solidement fixé à l'intérieur du logement 13. On peut prévoir pour les deuxièmes moyens de fixation 11 des dents provoquant un frottement accru de la partie de fixation 2 sur le logement 13 ou s'insérant plus profondément dans les parois du logement 13 lorsque celles-ci sont déformables comme c'est le cas si le logement 13 est formé de parois en matériau plastique.

Dans le cas illustré aux figures 1 et 2, le connecteur 1 forme un ensemble continu dont la partie de fixation 2 constitue l'une des extrémités. A proximité, une première zone de contact 3 est formée et reliée à la partie de fixation 2 par l'intermédiaire d'un coude 5. Le coude 5 permet d'ajuster la position angulaire relative de la partie de fixation 2 et de la zone de contact 3. Avantageusement, l'angle formé est obtus de sorte que, une fois dans le logement 13, la zone de contact 3 s'applique élastiquement sur l'organe électrique à connecter. La figure 2 montre nettement la position angulaire relative des parties 2 et 3 au repos alors que la figure 3 schématise une situation déformée élastiquement de la zone de contact 3 de sorte qu'un appui élastique est produit vers la base du logement 13.

Une partie de raccordement 6 permet de relier la première zone de contact 3 à une deuxième zone de contact 4. La partie de raccordement 6 présente dans le cas représenté un premier virage 7 raccordant la première zone de contact 3 à une portion 9 pouvant constituer une contact plan sur l'une des parois du logement 13, la portion plane 9 étant elle-même reliée à la deuxième zone de contact 4 par l'intermédiaire d'un deuxième virage 8. Au moins à proximité de la deuxième zone de contact 4, l'ensemble est avantageusement recourbé de façon convexe de sorte à offrir un profil bombé.

Dans le cas représenté, l'extrémité libre de la partie de fixation 2 et l'extrémité libre de la zone de contact 4 sont légèrement espacées ce qui permet, comme il sera décrit plus en détail ultérieurement, d'insérer un outil de fixation du connecteur 1 dans le module.

On notera que, la partie de fixation 2 étant située à l'une des extrémités du connecteur 1, le reste du connecteur 1 peut facilement se déformer notamment sous l'effet d'une sollicitation issue de la mise en contact des organes électriques. Cela procure au connecteur 1 une grande liberté de mouvement tout en préservant le caractère élastique de la déformation produite. La présence d'une partie de fixation 2 assure par ailleurs un positionnement optimal du connecteur 1 dans le logement 13 de sorte que les zones de contact 3, 4 sont parfaitement placées pour leur coopération avec les organes électriques.

En particulier, la partie de fixation 2 assure que la première zone de contact 3 vient en contact franc sur le premier organe électrique alors que la deuxième zone de contact 4 fait saillie au-delà de l'extrémité supérieure du logement 13 (comme présenté en figure 3) pour entrer en contact avec un deuxième organe électrique. Tout en étant parfaitement protégé à l'intérieur du logement 13, le connecteur garde une grande liberté de mouvements élastiques favorable à compenser les éventuels vibrations ou dilatations thermiques.

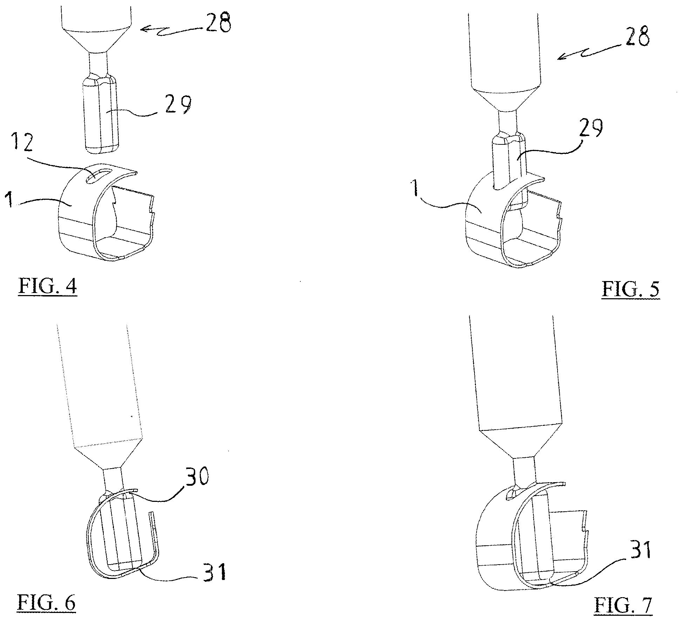

En référence aux figures 4 à 20, on décrit ci-après différentes étapes possibles de mise en place d'un connecteur 1 selon l'invention.

Suivant cet exemple, le connecteur 1 comporte un trou 12 du type oblong formé avantageusement au niveau de la deuxième zone de contact 4 et/ou au niveau de la partie de raccordement 6. La figure 4 montre comment un outil de préhension 28 présentant une portion d'insertion 29 dans le trou 12 peut être positionné de sorte à s'introduire dans le trou 12.

La figure 5 montre une étape de descente de l'outil de préhension 28 dans le trou 12. La descente se poursuit en figure 6 jusqu'à ce que l'extrémité distale de l'outil de préhension 28 vienne s'appliquer sur une surface d'appui 31 ici située au niveau de la zone de contact 3. A l'extrémité opposée de la portion d'insertion 29, une surface de butée 30 formée sous forme d'un rebord dû à une variation de diamètre de l'outil de préhension 28 vient s'appliquer sur la paroi intérieure du pourtour du trou oblong 12. La déformation élastique du connecteur 1 à ce stade favorise une bonne application et la mise en étau de la portion d'insertion 29 de l'outil 28 entre la surface d'appui 31 et la surface de butée 30.

Dans le cas représenté, la portion d'insertion 29 est formée d'un embout à méplat de section correspondant à celle du trou oblong 12. Par rotation de 90° de la portion d'insertion 29, la surface de butée 30 coopère sous forme de deux épaulements avec le pourtour du trou oblong 12. Cette coopération est représentée en figures 7, 8 et 9.

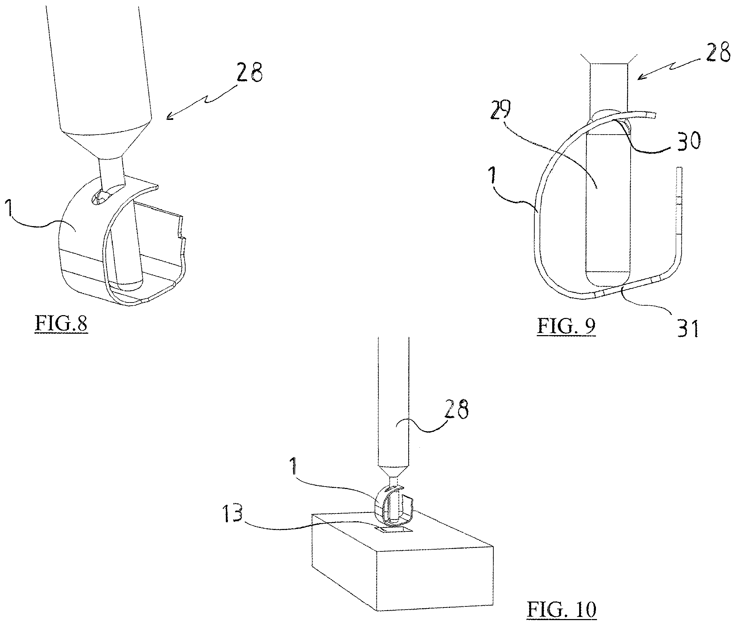

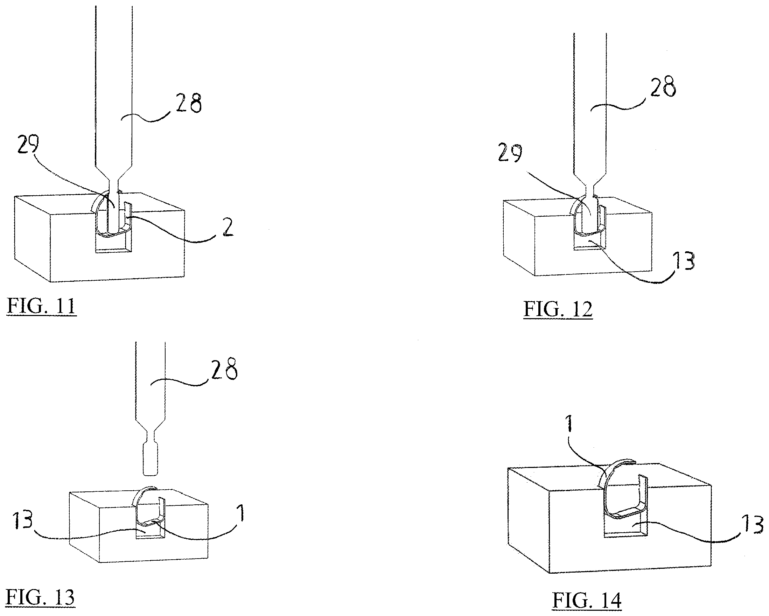

Ainsi arrimé à l'outil de préhension 28, le connecteur 1 est déplacé et mis en position au regard du logement 13 dans lequel il doit être fixé. Cette étape montrée en figure 10 est suivie par une étape de mise en translation de l'outil 28 de sorte à assurer l'introduction du connecteur 1 dans le logement 13 comme en figure 11.

La descente s'effectue dans le cas représenté jusqu'à ce que la partie de fixation 2 du connecteur 1 coopère avec les parois du logement 13 par l'intermédiaire des premiers moyens de fixation 10. Par conséquent, une portion de la partie de fixation 2 n'est pas à ce stade encore introduite dans le logement 13.

En figure 12, une rotation de 90° de l'outil de préhension 28 a été opérée de sorte à libérer la portion d'insertion 29 et permettre son retrait par un mouvement de translation inverse au précédent comme montré en figure 13.

A ce stade, le connecteur 1 a une position intermédiaire visible en figure 14.

Pour finaliser son montage, on a recours à un outil de fixation 32 présentant un embout sensiblement aplati et dont la largeur est compatible avec une insertion dans le logement 13.

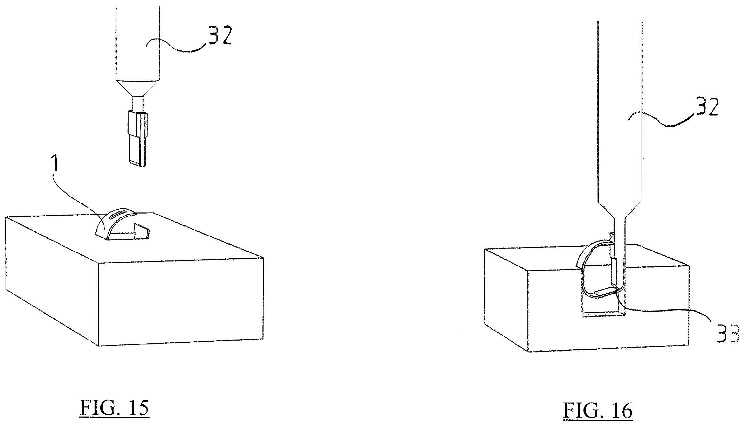

La descente de l'outil 32 permet à son embout d'être introduit entre les deux extrémités libres de la lame constituant le connecteur 1 de sorte à produire un appui sur une zone de poussée 33 sur le connecteur 1. La figure 16 montre cet appui.

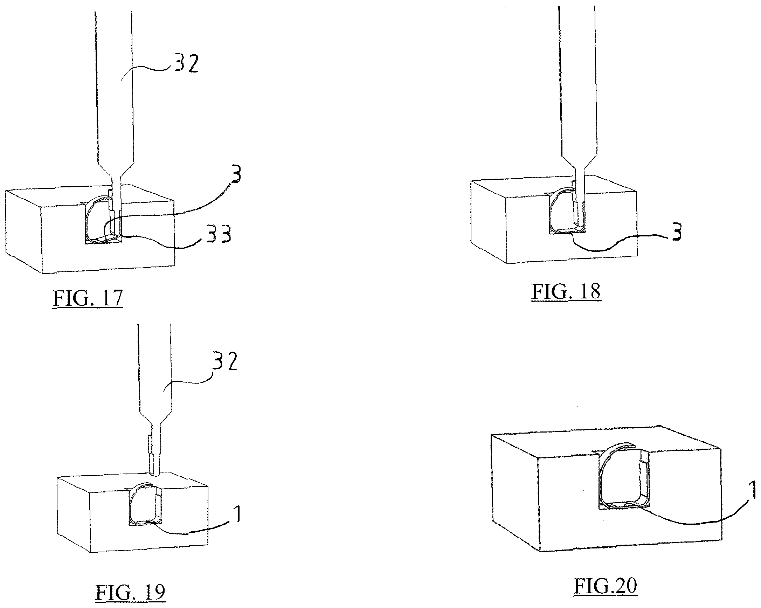

En poursuivant la descente de l'outil 32, le connecteur 1 opère un deuxième déplacement à l'intérieur du logement 13 comme visible aux figures 17 et 18. Dans le cas représenté, la zone de poussée 33 est configurée pour être positionnée à proximité de la partie de fixation 2 si bien que l'effort produit par l'outil de fixation 32 ne génère pas une déformation plastique du connecteur qui pourrait gêner le bon fonctionnement ultérieur et notamment la déformation élastique des première et deuxième zones de contact 3, 4.

Par ailleurs, avantageusement, l'embout de l'outil 32 s'appuie sur la paroi intérieure de la partie de fixation 2 si bien que cette dernière n'est pas susceptible d'un autre mouvement dans le logement 13 que son mouvement de descente.

Une fois en butée, l'outil de fixation 32 est retiré comme en figure 19 pour parvenir à une position définitive du connecteur 1 illustré en figure 20. A ce stade, la zone de contact 3 s'applique élastiquement sur le fond du logement 13 ou sur l'organe électrique situé au niveau de cette extrémité du logement 13. La deuxième zone de contact 4 fait saillie à l'autre extrémité du logement 13. Dans le même temps, l'ensemble des moyens de fixation 10, 11 produisent leur effet et maintiennent définitivement le connecteur 1 en position dans le logement 13.

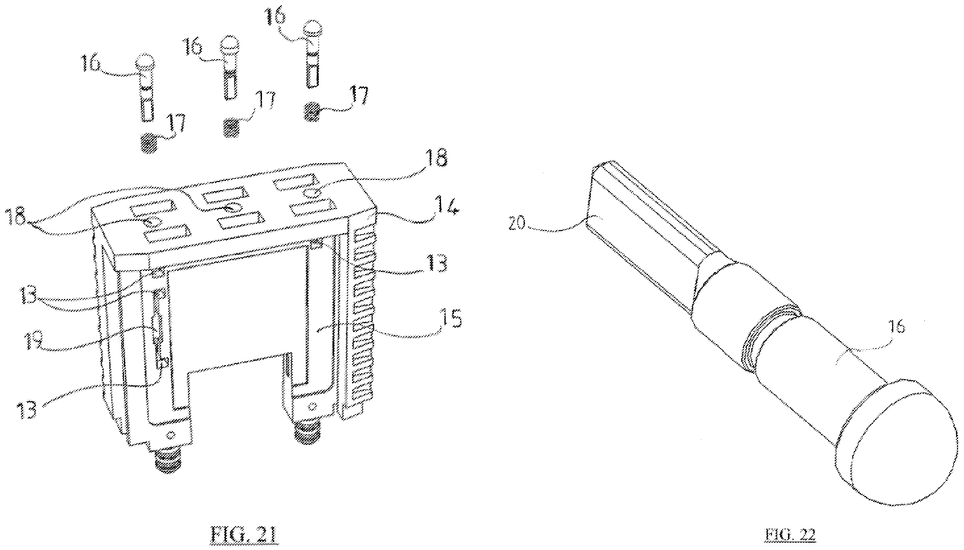

Les figures 21 à 34 montrent un exemple de module sous forme de chaudière pour la préparation de boissons chaudes. Ce type de module s'intègre dans une machine par exemple du type machine à café expresso étant entendu que la machine comprend généralement d'autres modules notamment un module de pompe.

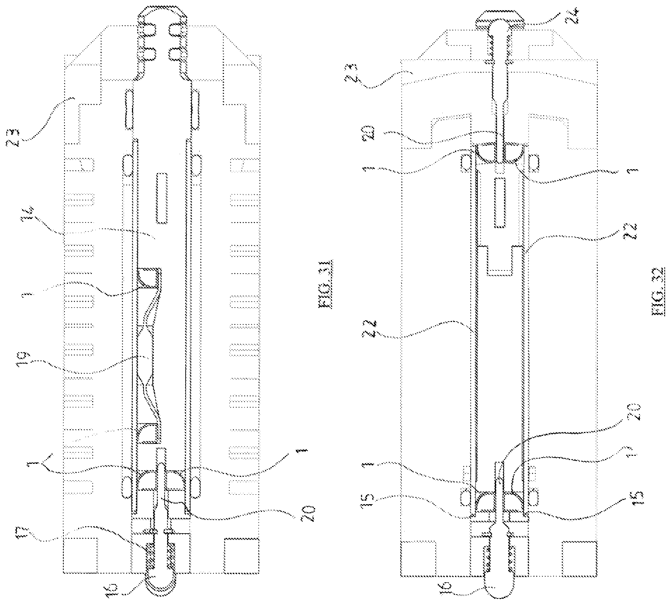

La figure 21 représente certains constituants au niveau d'un corps principal 14 définissant de face dont une visible au niveau du plan 15 et l'autre située en vis-à-vis relativement à un plan de symétrie longitudinal. En partie basse de la vue illustrée en figure 21, deux embouts assurent l'admission et la sortie du fluide à chauffer. Ce fluide est mis en circulation dans la chaudière au niveau de deux éléments de circuit rapportés de part et d'autre du corps principal 14. Ces deux éléments de circulation sont visibles aux figures 31 et 32 sous forme de deux plaques entourant le corps principal 14.

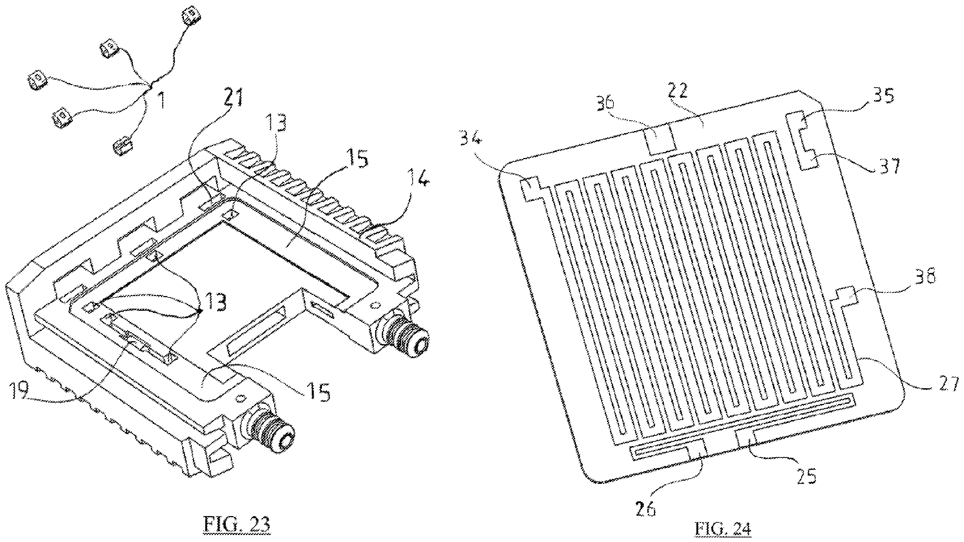

Le chauffage du fluide est assuré par l'intermédiaire d'une résistance chauffante 27 ici sous forme de résistance sérigraphiée sur l'une des faces d'une plaque 22 visible en figure 24, la plaque étant rapportée au niveau du plan 15 du corps principal 14. Le caractère avantageusement symétrique de l'ensemble proposé implique la présence d'une deuxième plaque 22 applicable de l'autre côté du corps principal 14.

Le corps 14 dispose d'éléments de raccordement électrique notamment pour l'alimentation de la résistance chauffante qu'il convient de connecter électriquement aux organes électriques portés par la plaque 22.

A noter que dans le cas illustré en figure 24, la plaque 22 porte également un autre organe électrique sous forme de sonde de température dont les bornes 25, 26 sont à connecter.

En revenant à la figure 21, le corps principal 14 comprend des trous 18 d'insertion de plots d'alimentation 16 montés élastiquement à l'encontre de ressorts de rappel 17. Les plots 16 assurent la liaison électrique vers l'alimentation de la machine. Un exemple est donné en figure 22 avec un embout arrondi pour la connexion vers l'extérieur et une portion opposée méplate 20 pour le contact sur un connecteur électrique 1 tel que détaillé plus loin.

Une portion intermédiaire du plot 16 comporte avantageusement un profil apte à coopérer avec un circlips ou autre moyen de fixation en position du plot 16.

Débouchant sur le plan 15, des logements 13 sont formés. Ils sont plus particulièrement visibles en figure 23 avec trois logements 13 pour la coopération avec trois plots 16 et deux logements 13 pour la coopération avec les extrémités d'un thermofusible 19.

Des connecteurs 1 sont fixés à l'intérieur des logements 13 en utilisant avantageusement la technique précédemment décrite. De cette façon, on met en appui la première zone de contact 3 avec l'organe électrique correspondant (soit le méplat 20 des plots 16, soit une extrémité du thermofusible 19). Dans le même temps, la deuxième zone de contact 4 reste en saillie relativement au plan 15 du corps principal 14 pour sa coopération ultérieure avec un deuxième organe électrique porté par la plaque 22.

Dans l'exemple de la figure 24, la plaque 22 porte une résistance chauffante 27 sérigraphiée disposant de bornes 34, 35 pour son alimentation en énergie électrique et d'une borne 36 de terre. Sur le circuit de la résistance, la coopération avec un thermofusible 19 est prévue par les bornes 37, 38.

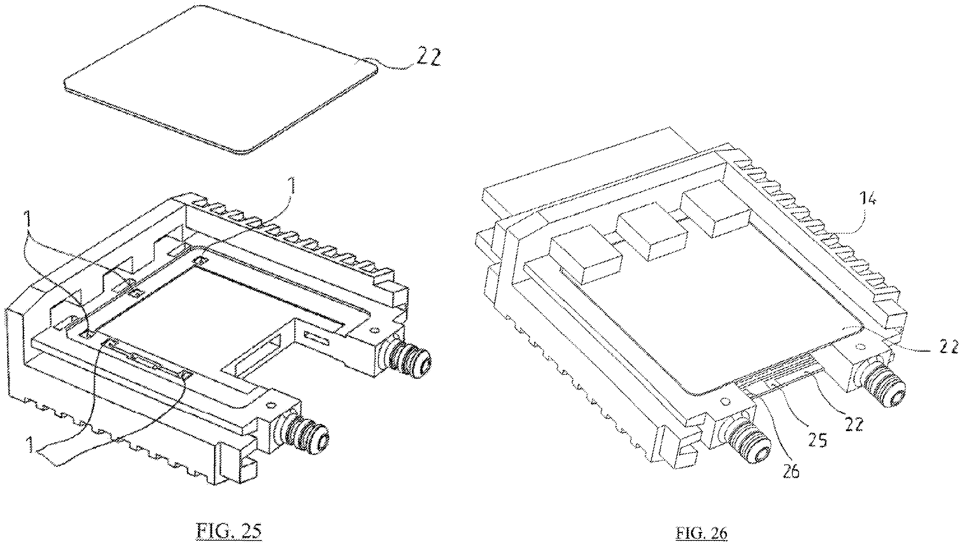

La figure 25 montre comment la plaque 22 est rapportée sur le plan 15 de sorte que chacun des connecteurs 1 s'applique élastiquement sur un organe électrique au niveau de la deuxième zone de contact. Par ce montage, le circuit d'alimentation en énergie électrique de la résistance 27 y compris avec le thermofusible 19 est entièrement réalisé en une seule étape. La figure 26 montre un exemple de fixation partielle de la plaque 22 sur le corps principal 14 ainsi que l'application de deux plaques 22.

On décrit ci-après une autre partie constitutive d'un module du type chaudière de sorte à coopérer avec l'ensemble précédemment décrit.

Un corps de tête 23 est réalisé avec une pluralité de trous aptes à recevoir chacun un plot de transmission de données 24 qui peut être similaire dans sa configuration aux plots 16 précédemment décrits.

Le montage de chaque plot de transmission de données 24 est par ailleurs avantageusement semblable au cas précédent avec un ressort de rappel et un circlips insérable dans une fente 21.

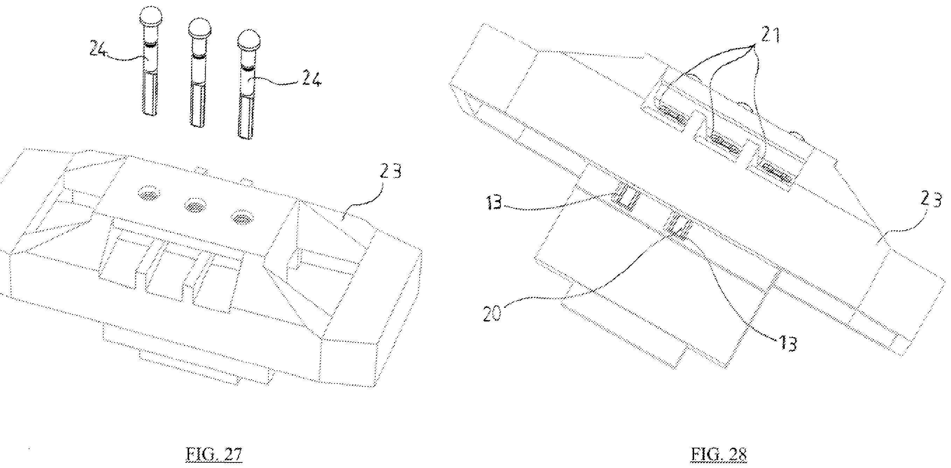

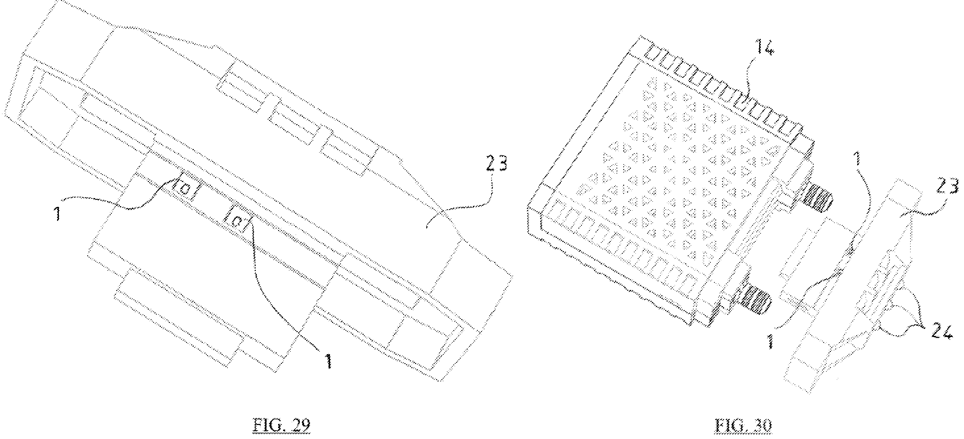

Par ailleurs, l'extrémité distale des plots 24 comporte un méplat apte à coopérer avec la première zone de contact 3 d'un connecteur 1 en débouchant sur le fond d'un logement 13. Cette situation est visible en figure 28 puis en figure 29 avec la présence d'un connecteur 1 dans le logement 13.

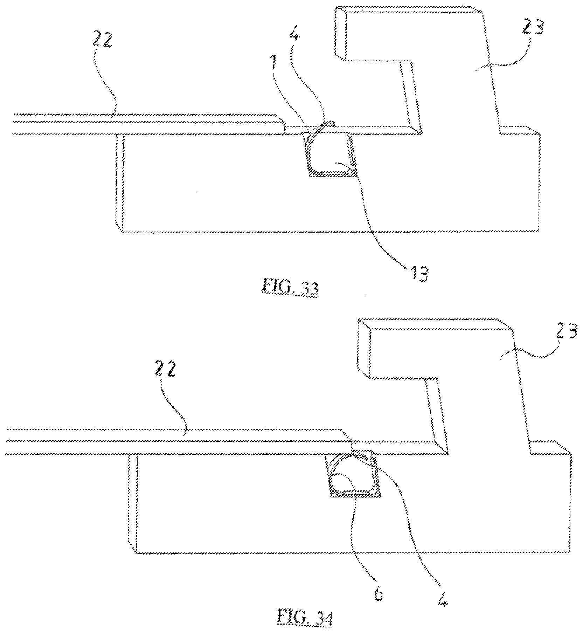

La figure 30 montre la mise en coopération du corps principal 14 et du corps de tête 23 par un mouvement d'insertion au cours duquel les deuxièmes zones de contact des connecteurs 1 du corps de tête 23 sont mis en contact avec les bornes 25, 26 de la sonde de température portée par la plaque 22 de part et d'autre du corps principal 14. Cette mise en contact électrique peut se faire de façon fiable et sans dégrader le connecteur 1 du fait de son profil recourbé permettant un glissement relativement à la plaque 22 comme c'est le cas schématisé aux figures 33 et 34. Au fur et à mesure de l'avancée du corps de tête 23 relativement à la plaque 22, le connecteur 1 s'efface élastiquement en rentrant vers l'intérieur du logement 13.

Les figures 31 et 32 sont deux coupes montrant les résultats de contact obtenus suivant l'exemple d'une chaudière. On note qu'une pluralité de contacts sont réalisés au niveau de deux plans 15 au moment où la plaque 22 est rapportée sur le corps principal 14.

On note aussi la parfaite application des premières zones de contact 3 des connecteurs 1 sur les parties méplates 20 des plots 16 et 24.

On notera enfin que du fait de la capacité de déformation et d'adaptation du connecteur 1, il peut être introduit dans des logements 13 de diverses configurations dont une configuration inclinée visible aux figures 33, 34.

Bien entendu, le cas d'application à un module sous forme de chaudière objet de la description détaillée ci-dessus n'est pas limitatif et d'autres modules entrent dans le cas de l'invention.

**REFERENCES**

| | | | |
|---|---|---|---|
| 1. | Connecteur | 34. | Borne |
| 2. | Partie de fixation | 35. | Borne |
| 3. | Première zone de contact | 36. | Borne terre |
| 4. | Deuxième zone de contact | 37. | Borne du thermo fusible |
| 5. | Coude | 38. | Borne du thermo fusible |
| 6. | Partie de raccordement | | |
| 7. | Premier virage | | |
| 8. | Deuxième virage | | |
| 9. | Portion plane | | |
| 10. | Premiers moyens de fixation | | |
| 11. | Deuxièmes moyens de fixation | | |
| 12. | Trou | | |
| 13. | Logement | | |
| 14. | Corps principal | | |
| 15. | Plan | | |
| 16. | Plots d'alimentation | | |
| 17. | Ressort | | |
| 18. | Trou | | |
| 19. | Thermo fusible | | |
| 20. | Méplat | | |
| 21. | Fente d'insertion de circlips | | |
| 22. | Plaque | | |
| 23. | Corps de tête | | |
| 24. | Plots de transmission de données | | |
| 25. | Borne | | |
| 26. | Borne | | |
| 27. | Résistance chauffante | | |
| 28. | Outil de préhension | | |
| 29. | Portion d'insertion | | |
| 30. | Surface de butée | | |
| 31. | Surface d'appui | | |
| 32. | Outil de fixation | | |
| 33. | Zone de poussée | | |

## Revendications

1. Module électrique pour machine de préparation de boissons, comportant au moins un premier organe électrique destiné à être relié à au moins un deuxième organe électrique par au moins un connecteur électrique (1), **caractérisé par le fait que** :
a) le connecteur électrique (1) est pourvu de quatre portions reliées entre-elles et formées:
- d'une première et d'une deuxième zones de contact (3, 4) aptes à s'appliquer élastiquement respectivement sur les premier et deuxième organes électriques,
- d'une partie de fixation (2) dotée de moyens de fixation dans un logement (13) du module, la partie de fixation (2) comportant une extrémité libre et une extrémité reliée à la première zone de contact (3),
- d'une partie de raccordement (6) reliant la première zone de contact (3) et la deuxième zone de contact (4) de sorte à former un ensemble continu qui, à l'exception de la partie de fixation (2), est déformable élastiquement,
b) le logement comporte :
- une extrémité supérieure au-delà de laquelle la deuxième zone de contact (4) fait saillie pour entrer en contact élastiquement avec le deuxième organe électrique,
- une extrémité de base au niveau de laquelle la première zone de contact (3) est configurée pour produire un appui élastique sur le premier organe électrique.

2. Module selon la revendication précédente dans lequel la partie de fixation (2) est reliée à la première zone de contact (3) par un coude (5) configuré pour que, au repos, la première zone de contact (3) et la partie de fixation (2) forment un angle obtus.

3. Module selon l'une des revendications précédentes dans lequel la partie de raccordement (6) comporte une portion convexe.

4. Module selon l'une des revendications précédentes dans lequel les moyens de fixation sont configurés pour coopérer avec deux parois opposées du logement (13).

5. Module selon la revendication précédente dans lequel les moyens de fixation comportent des premiers moyens (10) et des deuxièmes moyens (11) générant sur les parois du logement (13) un effort d'accrochage supérieur à celui des premiers moyens (10).

6. Module selon l'une des revendications 4 ou 5 dans lequel les moyens de fixation (10) comprennent au moins une paire de dents chacune apte à coopérer avec l'une des deux parois opposées du logement (13).

7. Module selon l'une des revendications précédentes dans lequel le logement (13) est un trou débouchant et les première et deuxième zones de contact (3, 4) sont configurées pour, lorsqu'elles sont au repos, faire saillie vers l'extérieur chacune à une extrémité du logement (13).

8. Module selon l'une des revendications précédentes dans lequel l'extrémité libre de la partie de fixation (2) et l'extrémité libre de la deuxième zone de contact (4) sont espacées de sorte à permettre l'insertion d'un outil de fixation du connecteur.

9. Module selon l'une des revendications précédentes faisant office de chaudière et comportant : un premier organe électrique constitué par une résistance chauffante (27), des deuxièmes organes électriques constitués par des plots d'alimentation (16) et au moins un connecteur électrique (1) pour relier chaque plot (1) à la résistance chauffante (27).

10. Module selon la revendication 9 comportant un autre premier organe électrique constitué par un thermofusible (19), un autre deuxième organe électrique constitué par un circuit de commande de la résistance chauffante (27) et au moins un connecteur électrique (1) pour relier chaque borne du thermofusible (19) au circuit de commande.

11. Module selon la revendication 10 dans lequel les logements (13) des connecteurs électriques (1) ont tous une extrémité débouchant dans un même plan (15).

12. Module selon l'une des revendications 9 à 11 comportant un autre premier organe électrique constitué par une sonde de température, des autres deuxièmes organes électriques constitués par des plots de transmission de données (24) et au moins un connecteur électrique (1) pour relier chaque borne de la sonde de température aux plots de transmission de données (24).

13. Module selon l'une des revendications précédentes dans lequel le connecteur électrique (1) est constitué par une lame recourbée.

14. Module selon la revendication précédente dans lequel la lame est en alliage de cuivre béryllium.

15. Module selon l'une des revendications précédentes dans lequel le connecteur électrique comporte un trou (12) oblong de préhension.

16. Procédé de montage d'un connecteur électrique (1) dans un module selon la revendication précédente, comportant les étapes suivantes :
- insertion d'un outil de préhension (28) dans le trou (12) oblong du connecteur;
- mise en appui d'une surface de butée (30) de l'outil de préhension (28) sur le pourtour du trou (12) oblong;
- positionnement du connecteur (1) dans le logement (13) par un premier mouvement d'introduction;
- libération et retrait de l'outil de préhension (28);
- fixation finale du connecteur (1) dans le logement (13) par un deuxième mouvement d'introduction de la partie de fixation (2) généré par un outil de fixation (32).

## Patentansprüche

1. Elektrisches Modul für eine Getränkezubereitungsmaschine, welches mindestens ein erstes elektrisches Element umfasst, welches dazu bestimmt ist, mit mindestens einem zweiten elektrischen Element über mindestens einen elektrischen Verbinder (1) verbunden zu werden, **dadurch gekennzeichnet, dass**:
a) der elektrische Verbinder (1) mit vier Abschnitten versehen ist, die untereinander verbunden sind und gebildet werden durch:
- einen ersten und einen zweiten Kontaktbereich (3, 4), die sich jeweils elastisch an das erste und das zweite elektrische Element anlegen können,
- einen Befestigungsteil (2), der mit Befestigungsmitteln in einer Aufnahme (13) des Moduls versehen ist, wobei der Befestigungsteil (2) ein freies Ende enthält und ein Ende, das mit dem ersten Kontaktbereich (3) verbunden ist,
- ein Verbindungsteil (6), welcher den ersten Kontaktbereich (3) und den zweiten Kontaktbereich (4) so miteinander verbindet, dass eine kontinuierliche Einheit entsteht, die mit Ausnahme des Befestigungsteils (2) elastisch verformbar ist,
b) die Aufnahme folgendes umfasst:
- ein oberes Ende, über welches der zweite Kontaktbereich (4) vorsteht und mit dem zweiten elektrischen Element elastisch in Berührung kommt,
- ein unteres Ende, an welchem der erste Kontaktbereich (3) so gestaltet ist, dass eine elastische Auflage auf dem ersten elektrischen Element entsteht.

2. Modul nach dem vorhergehenden Anspruch, in welchem der Befestigungsteil (2) mit dem ersten Kontaktbereich (3) über ein Kniestück (5) verbunden ist, das so gestaltet ist, dass der erste Kontaktbereich (3) und der Befestigungsbereich (2) in Ruhestellung einen stumpfen Winkel bilden.

3. Modul nach einem der vorhergehenden Ansprüche, in welchen der Verbindungsteil (6) einen konvexen Abschnitt umfasst.

4. Modul nach einem der vorhergehenden Ansprüche, in welchen die Befestigungsmittel so gestaltet sind, dass sie mit zwei Wänden gegenüber der Aufnahme (13) zusammenwirken.

5. Modul nach dem vorhergehenden Anspruch, in welchem die Befestigungsmittel erste Mittel (10) enthalten, sowie zweite Mittel (11), die an den Wänden der Aufnahme (13) eine Befestigungskraft erzeugen, die größer ist, als die der ersten Mittel (10).

6. Modul nach einem der Ansprüche 4 oder 5, in welchem die Befestigungsmittel (10) mindestens ein Zahnpaar umfassen, bei dem jeder Zahn mit einer der beiden Wände gegenüber der Aufnahme (13) zusammenwirken kann.

7. Modul nach einem der vorhergehenden Ansprüche, in welchen die Aufnahme (13) ein Durchgangsloch ist, und der erste und der zweite Kontaktbereich, (3, 4) so gestaltet sind, dass diese in Ruhestellung jeweils zum Ende der Aufnahme (13) nach außen vorspringen.

8. Modul nach einem der vorhergehenden Ansprüche, in welchem das freie Ende des Befestigungsteils (2) und das freie Ende des zweiten Kontaktbereichs (4) so voneinander beanstandet sind, dass ein Instrument zur Befestigung des Verbinders eingeschoben werden kann.

9. Modul nach einem der vorhergehenden Ansprüche, das als Kessel eingesetzt wird und Folgendes umfasst: ein erstes elektrisches Element bestehend aus einem Heizwiderstand (27), zweite elektrische Elemente bestehend aus Stromversorgungsstationen (16), und mindestens einen elektrischen Verbinder (1), um jede Stromversorgungsstation (1) an den Heizwiderstand (27) anzuschließen

10. Modul nach Anspruch 9, welches ein weiteres aus einer Thermosicherung (19) bestehendes elektrisches Element enthält, ein weiteres zweites, aus einem Steuerkreis für den Heizwiderstand (27) bestehendes elektrisches Element, und mindestens einen elektrischen Verbinder (1), um jede Klemme der Thermosicherung (19) an den Steuerkreis anzuschließen.

11. Modul nach Anspruch 10, in welchem die Aufnahmen (13) der elektrischen Verbinder (1) alle ein Ende haben, dass in ein und derselben Ebene (15) endet.

12. Modul nach einem der Ansprüche 9 bis 11, welches ein weiteres, aus einem Temperaturfühler bestehendes erstes elektrisches Element enthält, weitere zweite, aus Stromversorgunsstationen (24) bestehende elektrische Elemente, und mindestens einen elektrischen Verbinder (1), um jede Klemme des Temperaturfühlers an die Stromversorgunsstationen (24) anzuschließen.

13. Modul nach einem der vorhergehenden Ansprüche, in welchen der elektrische Verbinder (1) aus einer gebogenen Lamelle besteht.

14. Modul nach dem vorhergehenden Anspruch, in welchem die Lamelle aus einer Kupfer-Beryllium-Legierung besteht.

15. Modul nach einem der vorhergehenden Ansprüche, in welchem der elektrische Verbinder ein längliches Griffloch (12) enthält.

16. Montageverfahren eines elektrischen Verbinders (1) in ein Modul nach dem vorhergehenden Anspruch, welches die folgenden Schritte umfasst:
- Einfügen eines Greifinstruments (28) in das Langloch (12) des Verbinders;
- Auflage einer Anschlagsfläche (30) des Greifwerkzeugs (28) auf dem Umfang des Langlochs (12);
- Positionierung des Verbinders (1) in der Aufnahme (13) durch eine erste Einschubbewegung;
- Lösen und Herausziehen des Greifwerkzeugs (28) ;
- abschließende Befestigung des Verbinders (1) in der Aufnahme (13) durch eine zweite Einschubbewegung des Befestigungsteils (2), die durch ein Befestigungswerkzeug (32) erzeugt wird.

## Claims

1. An electric module for a drink preparation machine, comprising at least a first electric member intended to be connected to at least a second electric member by at least one electric connector (1), **characterized in that**:
a) the electric connector (1) is provided with four portions connected to one another and consisting of :
- a first and a second contact zones (3, 4) that can be elastically applied against the first and second electric members respectively,
- a fastening part (2) provided with means for fastening same in a housing (13) in the module, with the fastening part (2) having one free end and one end connected to the first contact zone (3),
- a connecting part (6) connecting the first contact zone (3) and the second contact zone (4) so as to form a continuous assembly which, except for the fastening part (2), can be elastically deformed,
b) the housing includes:
- an upper end beyond which the second contact zone (4) protrudes to elastically contact the second electric member,
- a base end at which the first contact zone (3) is so configured as to provide an elastic support on the first electric member.

2. A module according to the preceding claim, wherein the fastening part (2) is connected to the first contact zone (3) by means of an elbow (5) so configured that, at rest, the first contact zone (3) and the fastening part (2) form an obtuse angle.

3. A module according to one of the preceding claims, wherein the connecting part (6) comprises a convex portion.

4. A module according to one of the preceding claims, wherein the fastening means are so configured as to cooperate with two opposite walls of the housing (13).

5. A module according to the preceding claim, wherein the fastening means comprise first means (10) and second means (11) which generate a hooking force greater than that of the first means (10) on the housing walls (13).

6. A module according to one of claims 4 or 5, wherein the fastening means (10) comprise at least a pair of teeth, each adapted to cooperate with one of the two opposite walls of the housing (13).

7. A module according to one of the preceding claims, wherein the housing (13) is a through hole and the first and second contact zones (3, 4) are so configured as to protrude outwards, each at one end of the housing (13), when same are at rest.

8. A module according to one of the preceding claims, wherein the free end of the fastening part (2) and the free end of the second contact zone (4) are so spaced as to enable a connector fastening tool to be inserted.

9. A module according to one of the preceding claims, to be used as a boiler and comprising: a first electric member consisting of a heating resistor (27), second electric members consisting of power supply pads (16) and at least one electric connector (1) for connecting each pad (1) to the heating resistor (27).

10. A module according to claim 9, comprising another first electric member consisting of a thermofusible element (19), with another second electric member consisting of a heating resistor control circuit (27) and at least one electric connector (1) for connecting each terminal of the thermofusible element (19) to the control circuit.

11. A module according to claim 10, wherein the housings (13) of the electric connectors (1) all have one end opening in the same plane (15).

12. A module according to one of claims 9 to 11, comprising another first electric member consisting of a temperature sensor, other second electric elements consisting of data transmission pads (24) and at least one electric connector (1) for connecting each terminal of the temperature sensor to the data transmission pads (24).

13. A module according to one of the preceding claims, wherein the electric connector (1) consists of a curved blade.

14. A module according to the preceding claim, wherein the blade is made of beryllium copper alloy.

15. A module according to one of the preceding claims, wherein the electric connector comprises an elongate gripping hole (12).

16. A method for mounting an electric connector (1) in a module according to the preceding claim, comprising the steps of:
- inserting a gripping tool (28) into the elongate hole (12) of the connector;
- resting an abutment surface (30) of the gripping tool (28) onto the periphery of the elongate hole (12);
- positioning the connector (1) in the housing (13) by means of a first insertion movement;
- releasing and removing the gripping tool (28);
- finally fastening the connector (1) in the housing (13) by means of a second movement of insertion of the fastening part (2) generated by a fastening tool (32).
